# DEMANDE DE BREVET EUROPEEN

(11) **EP 4 070 898 A1**
(43) Date de publication de la demande: **12.10.2022**
(21) Numéro de dépôt: 22166990.6
(22) Date de dépôt: 06.04.2022
(51) Int. Cl.: B22F 10/12, B33Y 70/10, B29C 64/124, C04B 35/01, C04B 35/26, C04B 35/565, C04B 35/581, C04B 35/584, C04B 35/626, C04B 35/632, C04B 35/634, B29K 509/02

(54) **COMPOSITION DURCISSABLE POUR LA FABRICATION, PAR STÉRÉOLITHOGRAPHIE, DE PIÈCES CRUES EN MATÉRIAU CÉRAMIQUE OU MÉTALLIQUE PAR VOIE PHOTO-THERMIQUE**

(30) Priorité: 09.04.2021 FR 2103673
(71) Demandeur: S.A.S 3DCeram-Sinto, 87270 Bonnac la Cote (FR)
(72) Inventeur: CHAPUT, Christophe, 87410 Le Palais sur Vienne (FR); GAIGNON, Richard, 91770 Saint-Vrain (FR); SCHICK, Cindy, 87410 Le Palais sur Vienne (FR); SCHWEIZER, Stéphane, 87220 Feytiat (FR); BOUZRATI-ZERELLI, Mariem, 68990 Heimsbrunn (FR); LALEVÉE, Jacques, 68200 Mulhouse (FR)
(74) Mandataire: Cabinet Chaillot

(57) **Abrégé**

L'invention porte sur une composition durcissable pour la fabrication, par stéréolithographie, d'une pièce crue en un matériau céramique ou métallique, ladite composition durcissable comprenant au moins une poudre céramique et/ou métallique ; au moins un monomère et/ou oligomère polymérisable ; au moins un amorceur de la polymérisation du ou des monomères et/ou oligomères polymérisables. Le ou les amorceurs sont choisi(s) parmi les les sels d'iodonium, de sulfonium et de diazonium et les sels d'onium en combinaison avec au moins une aminé et/ou au moins une phosphine pour constituer un complexe à transfert de charge. Le ou les amorceurs peuvent générer l'amorçage d'une polymérisation thermique sous l'action d'une insolation par au moins une source d'irradiation UV, visible ou IR.

## Description

La présente invention concerne une composition durcissable pour la fabrication de pièces crues en matière céramique ou métallique par stéréolithographie, de telles pièces crues étant destinées à être soumises à des opérations de nettoyage, déliantage et frittage pour obtenir des pièces céramiques ou métalliques finies.

La stéréolithographie comprend généralement les étapes suivantes, pour l'obtention de ces pièces crues :
- on construit, par conception assistée par ordinateur, un modèle informatique de la pièce à fabriquer, modèle dont les dimensions sont légèrement plus grandes que celles de la pièce à fabriquer afin de prévoir un retrait du matériau céramique ou métallique au cours de la fabrication de la pièce ; et
- on fabrique la pièce de la façon suivante :
   - on forme, sur un support rigide, une première couche d'une composition photodurcissable comprenant au moins une matière céramique ou métallique, un monomère et/ou oligomère photodurcissable, un photoinitiateur et le cas échéant au moins l'un parmi un plastifiant, un solvant, un dispersant et un inhibiteur de polymérisation ;
   - on fait durcir la première couche de la composition photodurcissable par irradiation (par balayage laser de la surface libre de ladite couche ou par système de projection à diodes) selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant comme pour la première couche ;
   - optionnellement, on répète les étapes ci-dessus pour obtenir la pièce à l'état cru.

Ensuite, comme indiqué ci-dessus, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

On peut fabriquer la pièce par voie pâteuse ou par voie liquide.
- Dans une fabrication par voie pâteuse, la composition photodurcissable se présente sous la forme d'une pâte et le support rigide est une plate-forme de travail supportant les différentes couches de la pièce en cours de construction ainsi que la pâte et l'on forme généralement chacune des couches par abaissement de la plate-forme de travail et étalement d'une épaisseur de pâte prédéfinie. Une réserve de pâte est stockée dans des réservoirs qui sont automatiquement vidés d'une quantité de pâte prédéfinie à chaque couche à l'aide d'un piston. Cela crée un bourrelet de pâte à étaler sur la couche supérieure de la pièce en cours de fabrication qui aura été abaissée auparavant par la plate-forme de travail. Chaque couche est généralement étalée par raclage par une lame de raclage qui balaye la surface de travail de la plate-forme de travail, par exemple en avançant suivant une direction horizontale rectiligne.
- Dans une fabrication par voie liquide, la composition photodurcissable se présente sous la forme d'une suspension de faible viscosité.

- Dans un premier mode de réalisation par la voie liquide, le support rigide est une plate-forme que l'on fait descendre dans un bain de la suspension photodurcissable pour la recouvrir d'une couche de ladite suspension, couche que l'on fait ensuite durcir par irradiation comme indiqué ci-dessus. Sur cette première couche, on forme ensuite successivement chacune des autres couches par abaissement pas à pas de la plate-forme dans le bain de telle sorte que l'étage supérieur de la pièce en cours de formation soit abaissé sous la surface libre de la suspension photodurcissable pour la formation de la couche en question, laquelle est ensuite irradiée.
- Dans un deuxième mode de réalisation par la voie liquide, la suspension photodurcissable est contenue dans un réservoir à fond transparent pour l'irradiation, et la pièce est maintenue sur un support rigide qui est une plate-forme remontée pas à pas. Ainsi, on commence par faire durcir une couche de fond, puis la plate-forme est remontée d'un pas pour permettre à la suspension de constituer une nouvelle couche que l'on fait alors durcir, l'opération étant répétée à chaque couche.
- Dans un troisième mode de réalisation par la voie liquide, la suspension photodurcissable est étalée en couche sur un film transparent pour l'irradiation, le film étant apte à se dérouler horizontalement. La pièce est formée sur une plate-forme rigide qui descend pour venir en contact avec la couche que l'on fait durcir par irradiation à travers le film. On déroule ensuite un nouveau segment de film revêtu d'une nouvelle couche photodurcissable et on réitère l'opération jusqu'à la fin de la construction de la pièce.

Les différentes poudres céramiques ou métalliques que l'on utilise en stéréolithographie présentent des comportements d'absorption de la lumière UV à la longueur d'onde du faisceau UV utilisé (355nm) qui sont variables de l'une à l'autre.

Certaines poudres sont très absorbantes, comme c'est le cas d'une poudre de céramique lanthane strontium manganite (LSM), de carbure de silicium (SiC) ou d'argent (Ag), et d'autres le sont beaucoup moins, comme l'alumine (Al₂O₃) et la zircone (ZrO₂) .

On peut ainsi mentionner que la poudre de ZrO₂ absorbe seulement 8% de la lumière UV à 355 nm, alors que LSM et SiC en absorbent chacun plus de 90%.

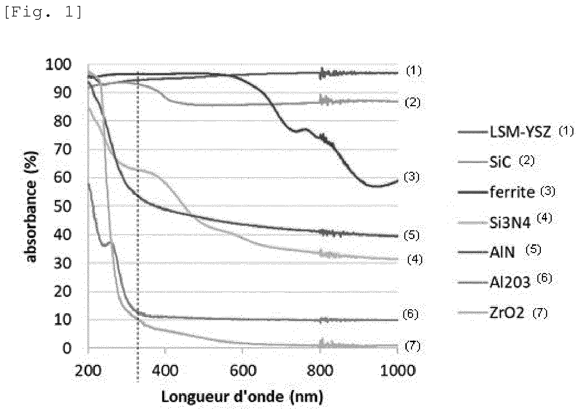

[Fig. 1] donne les spectres d'absorption de certaines poudres céramiques / métalliques.

Dans ces derniers cas, la lumière absorbée par la poudre n'est plus disponible pour le photoamorceur et la réaction de photopolymérisation ne peut donc plus avoir lieu.

En d'autres termes, le manque de réactivité de certaines pâtes ou suspensions céramiques ou métalliques photosensibles sous insolation UV rend difficile, voire impossible, la construction d'un objet par stéréolithographie UV.

Pour résoudre ce problème, la Société déposante a déjà déposé une première demande de brevet français FR3099079 rapportant l'utilisation d'un amorceur thermique dans une pâte ou suspension céramique ou métallique dans le but d'utiliser l'énergie thermique libérée par les poudres céramiques ou métalliques lors de leur insolation par une lumière aussi bien UV-visible qu'IR pour générer l'amorçage contrôlé de la polymérisation thermique.

Dans ce cas, l'absorbance des particules céramiques ou métalliques à la longueur d'onde de travail est donc favorable puisque l'énergie lumineuse absorbée par les particules céramiques ou métalliques est convertie en chaleur et que cette chaleur est ensuite absorbée par un amorceur thermique qui permet la polymérisation de la résine.

Cependant, on peut signaler, d'une part que les amorceurs thermiques sont en général des composés dangereux pouvant entrainer des difficultés pour la production, le stockage, le transport et l'utilisation des suspensions ; et d'autre part que les suspensions de céramique ont tendance à polymériser de manière spontanée sur une échelle de temps relativement courte.

Pour pallier ces inconvénients, la Société déposante a développé un nouveau système amorceur permettant la polymérisation des pâtes ou suspensions céramiques ou métalliques lors de leur insolation par une lumière aussi bien UV-visible qu'IR : le système d'amorçage à l'aide d'un sel d'onium ou d'un complexe à transfert de charge (CTC).

Les complexes à transfert de charges sont des couples de donneur (DE) et d'accepteur (AE) d'électrons. Ces complexes présentent une réactivité thermique et photochimique permettant l'initiation de la polymérisation radicalaire selon deux processus :
- Initiation photochimique : Le complexe CTC absorbe dans l'UV-visible pour former un état excité. Le transfert d'électron du DE vers l'AE conduit au clivage de la molécule pour libérer principalement des radicaux très réactifs.
- Initiation thermique : A chaud, le complexe CTC se clive pour libérer des radicaux libres. Dans ce cas, ce sont les particules céramiques ou métalliques qui absorbent à la longueur d'onde de travail, l'énergie lumineuse absorbée est ensuite convertie en chaleur qui est ensuite absorbée par l'amorceur CTC.

Les complexes CTC étant plus stables que les amorceurs thermiques classiques, la stabilité en pot des suspensions est rallongée. Par ailleurs, le complexe CTC est formé de molécules non répertoriées dangereuses.

A cet effet, la présente invention porte sur une composition durcissable pour la fabrication, par stéréolithographie, d'une pièce crue en un matériau céramique ou métallique, ladite composition durcissable comprenant :
- au moins une poudre choisie parmi les poudres céramiques et/ou les poudres métalliques ;
- au moins un monomère polymérisable et/ou au moins un oligomère polymérisable ;
- au moins un amorceur de la polymérisation dudit ou desdits monomères polymérisables et/ou dudit ou desdits oligomères polymérisables,

caractérisé par le fait que le ou les amorceurs est ou sont choisi(s) parmi :
   - les sels d'iodonium, de sulfonium et de diazonium ; et
   - les sels d'onium en combinaison avec au moins une amine et/ou au moins une phosphine pour constituer un complexe à transfert de charge,
ledit ou lesdits amorceurs étant capable(s) de générer l'amorçage d'une polymérisation thermique sous l'action d'une insolation par au moins une source d'irradiation choisie parmi les sources d'irradiation UV, visible ou IR.

La composition durcissable peut être de consistance semi-liquide à pâteuse.

La ou les poudres céramiques peuvent être choisies parmi :
- les poudres céramiques oxydes, telles que la céramique lanthane strontium manganite, la céramique lanthane strontium manganite en mélange avec de la zircone stabilisée par l'yttrium, la ferrite ; et
- les poudres céramiques non oxydes, telles que le carbure de silicium, le nitrure de silicium et le nitrure d'aluminium.

La ou les poudres métalliques peuvent être choisies parmi l'argent, le cuivre, le fer, le tungstène et leurs alliages.

Le ou les monomères et/ou oligomères peut ou peuvent être choisis parmi les (méth)acrylates polyfonctionnels, comme le diméthacrylate de bisphénol A diéthoxylé, le diacrylate de 1,6-hexanediol, le diacrylate de 3-méthyl-1,5-pentanediol, le triacrylate de triméthylolpropane, et leurs mélanges.

Les sels d'onium en combinaison avec au moins une amine et/ou au moins une phosphine peuvent être choisis parmi les sels d'iodonium, de sulfonium et de diazonium.

En particulier, selon la présente invention, le sel d'iodonium peut être un diaryliodonium tel que l'hexafluorophosphate de bis-(4-t-butylphényl)-iodonium.

En particulier, selon la présente invention, le sel de sulfonium peut être un triarylsulfonium tel que l'hexafluoroantimoniate de triarylsulfonium en mélange avec du carbonate de propylène, à raison notamment de 50% d'hexafluoroantimoniate de triarylsulfonium dans le mélange.

Les amines peuvent être choisies parmi les amines primaires, secondaires et tertiaires, aliphatiques ou aromatiques. En particulier, l'amine peut être choisie parmi le 2-[4-(diméthylamino)phényl]éthanol, le 2,2'-(4-méthylphénylimino)diéthanol, le 4-(diméthylamino)benzoate d'éthyle et la N-méthyldiéthanolamine.

Les phosphines peuvent être choisies parmi les phosphines primaires, secondaires et tertiaires, aliphatiques ou aromatiques. En particulier, la phosphine peut être choisie parmi la triphénylphosphine, le 4-(diphénylphosphino)styrène, l'acide 4-(diphénylphosphino)benzoïque, l'acide 2-(diphénylphosphino)benzoïque, le 2-(diphénylphosphino)benzaldéhyde, le (1*R*,2*R*)-(+)-1,2-diaminocyclohexane-N,N'-bis(2-diphénylphosphino-1-naphtoyl) ou (R,R)-DACH-naphtyl-Trost Ligand (ligand de Trost), le bis[2-(diphénylphosphino)phényl] éther.

La composition selon l'invention peut comprendre en outre au moins un plastifiant choisi notamment parmi le polyéthylène glycol, le phtalate de dibutyle, le glycérol.

La composition selon l'invention peut comprendre en outre au moins un dispersant choisi notamment parmi les esters phosphoriques.

La composition selon l'invention peut comporter, par rapport au volume total :
- 25 à 65 parties en volume de la ou des poudres métalliques et/ou céramiques ;
- 20 à 50 parties en volume du ou des monomères et/ou oligomères ;
- 0,01 à 5 parties en volume du ou des amorceurs de polymérisation ;
- jusqu'à 25 parties en volume, notamment 5 à 25 parties en volume, du ou des plastifiants ;
- jusqu'à 8 parties en volume, notamment 1 à 8 parties en volume, du ou des dispersants.

La présente invention porte également sur un procédé de fabrication, par stéréolithographie d'une pièce crue céramique ou métallique, suivant lequel des couches à base d'une composition durcissable par polymérisation comprenant une poudre céramique ou métallique selon que l'on souhaite fabriquer une pièce crue respectivement céramique ou métallique, sont amenées successivement à durcir par ladite polymérisation selon un motif défini pour chaque couche, la première couche étant formée sur une plateforme de construction et chaque autre couche étant formée puis amenée à durcir sur la couche précédente, caractérisé par le fait que :
on utilise une composition durcissable telle que définie ci-dessus et on conduit, sur chaque couche, une polymérisation photochimique et/ou thermique sous l'action d'une insolation par au moins une source d'irradiation choisie parmi les sources d'irradiation UV, visible ou IR.

Les Exemples suivants illustrent la présente invention, sans toutefois en limiter la portée.

### Exemples 1 à 11

On a préparé des suspensions dont la composition est donnée dans les Tableaux suivants en % en volume du volume total et on a conduit des essais de stéréolithographie, aux longueurs d'onde indiquées dans les tableaux, à la puissance de 2 W et au diamètre de faisceau de 300 µm. Ces expériences ont été réalisées avec une machine de stéréolithographie de type CERAMAKER équipée de différents lasers.

Les résultats figurent également dans chacun des Tableaux 1 et 2.

**[Table 1]**

| Exemple | Ingrédients | | | | | | | Longueu r d'onde (nm) | Résultat |
|---|---|---|---|---|---|---|---|---|---|
| | C | M | A (quantité) | | | D | P | | |
| 1 (comparatif ) | 4 5 | 36, 4 | A0 (1 ) | - | - | 2, 6 | 15 | 355 | Pas de réactivité |
| 2 (comparatif ) | 4 5 | 36, 4 | A0 (1 ) | - | - | 2, 6 | 15 | 1064 | Pas de réactivité |
| 3 | 4 5 | 35, 2 | - | A1 (2) | A2 (0,2 ) | 2, 6 | 15 | 1064 | Fabricatio n d'un objet de plusieurs mm de hauteur |
| 4 | 4 5 | 35, 2 | - | A1 (2) | A2 (0,2 ) | 2, 6 | 15 | 355 | Fabricatio n d'un objet de plusieurs mm de hauteur |
| 5 | 4 5 | 35, 4 | - | A1 ( 2) | - | 2, 6 | 15 | 355 | Fabricatio n d'un objet de plusieurs mm de hauteur |
| 6 | 4 5 | 35, 2 | - | A1 ( 2) | A3 (0,2 ) | 2, 6 | 15 | 355 | Fabricatio n d'un objet de plusieurs mm de hauteur |
| 7 | 4 5 | 35, 2 | - | A1 ( 2) | A4 (0,2 ) | 2, 6 | 15 | 355 | Fabricatio n d'un objet de plusieurs mm de hauteur |
| 8 | 4 5 | 35, 2 | - | A1 (2 ) | A5 (0,2 ) | 2, 6 | 15 | 355 | Fabricatio n d'un objet de plusieurs mm de hauteur |
| 9 | 4 5 | 33, 9 | - | A6 ( 3,8 ) | A2 (0,2 ) | 2, 6 | 14, 5 | 355 | Fabricatio n d'un objet de plusieurs mm de hauteur |

| | | | | | | | | | |
|---|---|---|---|---|---|---|---|---|---|
| C Poudre céramique : Carbure de silicium M Monomère : Diacrylate de bisphénol A di-éthoxylé A Amorceurs : - A0 : Photoamorceur sensible à 355 nm : 2-Hydroxy-2-méthyl-1-phényl-propane-1-one - A1 : SC938 Hexafluorophosphate de bis-(4-t-butylphényl)-iodonium - A2 : DMAPE (2-[4-(Diméthylamino)phényl]éthanol) - A3 : 2,2'-(4-méthylphénylimino)diéthanol - A4 : 4-(diméthylamino)benzoate d'éthyle - A5 : N-méthyldiéthanolamine - A6 : mélange de sels hexafluoroantimoniate de triarylsulfonium dans 50 % de carbonate de propylène D Dispersant : ester phosphorique Beycostat C 213 P Plastifiant : Polyéthylène glycol 300 | | | | | | | | | |

**[Table 2]**

| Ingrédients | Ex. 10 (comp.) | Ex. 11 (de l'invention) |
|---|---|---|
| Ferrite | 50 | 50 |
| Diacrylate de bisphénol A di-éthoxylé (Monomère) | 34 | 34 |
| 2-Hydroxy-2-méthyl-1-phényl-propane-1-one (Photoamorceur sensible à 355nm) | 2 | 0 |
| (Hexafluorophosphate de bis-(4-t-butylphényl)-iodonium) SC938 (AE) | 0 | 1,8 |
| (2-[4-(Diméthylamino)phényl]éthanol) (DMAPE) (DE) | 0 | 0,2 |
| Beycostat C 213 : ester phosphorique (Dispersant) | 2,5 | 2,5 |
| Polyéthylène glycol 300 (Plastifiant) | 11,5 | 11,5 |
| Longueur d'onde (nm) | 355 | 355 |
| Puissance (W) | 2 | 2 |
| Diamètre de faisceau (pm) | 300 | 300 |
| | Pas de réactivité | Fabrication d'un objet de plusieurs mm de hauteur |

## Revendications

1. Composition durcissable pour la fabrication, par stéréolithographie, d'une pièce crue en un matériau céramique ou métallique, ladite composition durcissable comprenant :
- au moins une poudre choisie parmi les poudres céramiques et/ou les poudres métalliques ;
- au moins un monomère polymérisable et/ou au moins un oligomère polymérisable ;
- au moins un amorceur de la polymérisation dudit ou desdits monomères polymérisables et/ou dudit ou desdits oligomères polymérisables,
**caractérisé par le fait que** le ou les amorceurs est ou sont choisi(s) parmi :
- les sels d'iodonium, de sulfonium et de diazonium ; et
- les sels d'onium en combinaison avec au moins une amine et/ou au moins une phosphine pour constituer un complexe à transfert de charge,
ledit ou lesdits amorceurs étant capable(s) de générer l'amorçage d'une polymérisation thermique sous l'action d'une insolation par au moins une source d'irradiation choisie parmi les sources d'irradiation UV, visible ou IR.

2. Composition selon la revendication 1, **caractérisée par le fait que** la ou les poudres céramiques sont choisies parmi :
- les poudres céramiques oxydes, telles que la céramique lanthane strontium manganite, la céramique lanthane strontium manganite en mélange avec de la zircone stabilisée par l'yttrium, la ferrite ; et
- les poudres céramiques non oxydes, telles que le carbure de silicium, le nitrure de silicium et le nitrure d'aluminium.

3. - Composition selon l'une des revendications 1 et 2, **caractérisée par le fait que** la ou les poudres métalliques sont choisies parmi l'argent, le cuivre, le fer, le tungstène et leurs alliages.

4. Composition selon l'une des revendications 1 à 3, **caractérisée par le fait que** le ou les monomères et/ou oligomères est ou sont choisis parmi les (méth)acrylates polyfonctionnels, comme le diméthacrylate de bisphénol A diéthoxylé, le diacrylate de 1,6-hexanediol, le diacrylate de 3-méthyl-1,5-pentanediol, le triacrylate de triméthylolpropane, et leurs mélanges.

5. Composition selon l'une des revendications 1 à 4, **caractérisée par le fait que** les sels d'onium utilisés en combinaison avec au moins une amine et/ou au moins une phosphine sont choisis parmi les sels d'iodonium, de sulfonium et de diazonium.

6. Composition selon l'une des revendications 1 à 5, **caractérisée par le fait que** le sel d'iodonium est un diaryliodonium tel que l'hexafluorophosphate de bis-(4-t-butylphényl)-iodonium.

7. Composition selon l'une des revendications 1 à 5, **caractérisée par le fait que** le sel de sulfonium est un triarylsulfonium tel que l'hexafluoroantimoniate de triarylsulfonium en mélange avec du carbonate de propylène, à raison notamment de 50% d'hexafluoroantimoniate de triarylsulfonium dans le mélange.

8. Composition selon l'une des revendications 1 à 7, **caractérisée par le fait que** les amines sont choisies parmi les amines primaires, secondaires et tertiaires, aliphatiques ou aromatiques.

9. Composition selon la revendication 8, **caractérisée par le fait que** l'amine est choisie parmi le 2-[4-(diméthylamino)phényl]éthanol, le 2,2'-(4-méthylphénylimino)diéthanol, le 4-(diméthylamino)benzoate d'éthyle et la N-méthyldiéthanolamine.

10. Composition selon l'une des revendications 1 à 9, **caractérisée par le fait que** les phosphines sont choisies parmi les phosphines primaires, secondaires et tertiaires, aliphatiques ou aromatiques.

11. Composition selon la revendication 10, **caractérisée par le fait que** la phosphine est choisie parmi la triphénylphosphine, le 4-(diphénylphosphino)styrène, l'acide 4-(diphénylphosphino)benzoïque, l'acide 2-(diphénylphosphino)benzoïque, le 2-(diphénylphosphino)benzaldéhyde, le (1*R*,2*R*)-(+)-1,2-diaminocyclohexane-N,N'-bis(2-diphénylphosphino-1-naphtoyl) ou (*R*,*R*)-DACH-naphtyl-Trost Ligand (ligand de Trost), le bis[2-(diphénylphosphino)phényl] éther.

12. Composition selon l'une des revendications 1 à 11, **caractérisée par le fait qu'**elle comprend en outre au moins un plastifiant choisi notamment parmi le polyéthylène glycol, le phtalate de dibutyle, le glycérol.

13. Composition selon l'une des revendications 1 à 12, **caractérisée par le fait qu'**elle comprend en outre au moins un dispersant choisi notamment parmi les esters phosphoriques.

14. Composition selon l'une des revendications 1 à 13, **caractérisée par le fait qu'**elle comporte, par rapport au volume total :
- 25 à 65 parties en volume de la ou des poudres métalliques et/ou céramiques ;
- 20 à 50 parties en volume du ou des monomères et/ou oligomères ;
- 0,01 à 5 parties en volume du ou des amorceurs de polymérisation ;
- jusqu'à 25 parties en volume, notamment 5 à 25 parties en volume, du ou des plastifiants ;
- jusqu'à 8 parties en volume, notamment 1 à 8 parties en volume, du ou des dispersants.

15. Procédé de fabrication, par stéréolithographie d'une pièce crue céramique ou métallique, suivant lequel des couches à base d'une composition durcissable par polymérisation comprenant une poudre céramique ou métallique selon que l'on souhaite fabriquer une pièce crue respectivement céramique ou métallique, sont amenées successivement à durcir par ladite polymérisation selon un motif défini pour chaque couche, la première couche étant formée sur une plateforme de construction et chaque autre couche étant formée puis amenée à durcir sur la couche précédente, **caractérisé par le fait que** l'on utilise une composition durcissable telle que définie à l'une des revendications 1 à 14 et que l'on conduit, sur chaque couche, une polymérisation thermique sous l'action d'une insolation par au moins une source d'irradiation choisie parmi les sources d'irradiation UV, visible ou IR.
